## Europäisches Patentamt

## European Patent Office

## Office européen des brevets

(19)

(11) Veröffentlichungsnummer: **0 133 985**
**B1**

(12) **EUROPÄISCHE PATENTSCHRIFT**

(45) Veröffentlichungstag der Patentschrift:
31.05.89

(21) Anmeldenummer: **84109052.5**

(22) Anmeldetag: **31.07.84**

(51) Int. Cl.⁴: **H 04 N 7/087**, G 11 B 15/02, G 11 B 19/02, G 04 G 15/00

(54) **Einrichtung zum automatischen Ein- und Ausschalten des Aufzeichnungsbetriebs eines Videorecorders.**

(30) Priorität: **03.08.83 DE 3328001**

(43) Veröffentlichungstag der Anmeldung:
**13.03.85 Patentblatt 85/11**

(45) Bekanntmachung des Hinweises auf die Patenterteilung:
**31.05.89 Patentblatt 89/22**

(84) Benannte Vertragsstaaten:
**AT BE FR GB IT NL**

(56) Entgegenhaltungen:
**EP-A-0 041 121**
**WO-A-80/02093**
**DE-A-3 243 610**
**GB-A-2 034 995**
**GB-A-2 126 002**

**NACHRICHTENTECHNISCHE ZEITSCHRIFT N.T.Z.,**
**Band 35, Nr. 6, Juni 1982, Seiten 368-376,**
**Schwäbisch Gmünd; H.E. KRÜGER "Das digitale**
**Fernsehkennungssystem ZPS"**

(73) Patentinhaber: **Interessengemeinschaft für Rundfunkschutzrechte GmbH Schutzrechtsverwertung & Co. KG., Bahnstrasse 62, D-4000 Düsseldorf 1 (DE)**

(72) Erfinder: **Heller, Arthur, Dipl.- Ing., Waldstrasse 44, D-8059 Eichenried (DE)**

(74) Vertreter: **Gornott, Dietmar, Dipl.- Ing., Zilleweg 29, D-6100 Darmstadt 12 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung bezieht sich auf eine Einrichtung gemäß dem Oberbegriff des Anspruchs 1. Eine solche Einrichtung ist aus der GB-A-2 034 995 bekannt.

Um mit einem Videorecorder auch in Abwesenheit des Benutzers einen ausgewählten Programmbeitrag aufzeichnen zu können, ist es bekannt, die angekündigte Anfangszeit einschließlich Kalenderdatum sowie die Endzeit bzw. Dauer eines solchen Beitrags einer Speichereinrichtung einzugeben. Zur Vereinfachung dieser Eingabe ist es ferner bekannt, diese Daten auch codiert in einem Programmankündigungsmedium verfügbar und dadurch auf einfache Weise einlesbar zu machen, indem z. B. ein optisch lesbarer Strichcode in einer Programmzeitschrift ausgedruckt und vom Benutzer mit einem entsprechenden Sensor abgetastet wird. Die eingegebenen bzw. eingelesenen Daten werden als Sollwert einem Datenvergleicher zugeführt, welchem als Vergleichs-Istwert die Realzeitinformation einer Kalenderuhr dient. Mit dem Zeitpunkt der Gleichheit zwischen Soll- und Istinformation wird der Aufzeichnungsbetrieb des Videorecorders eingeschaltet und solange aufrechterhalten, wie es der angekündigten und eingegebenen Beitragsendzeit bzw. -dauer entspricht. Eine solche, direkt und ausschließlich zeitgesteuerte Einrichtung führt jedoch immer dann zu Fehlaufzeichnungen, wenn bei der Ausstrahlung wegen Programmänderungen, Zeitverschiebungen oder Längenüberziehungen von den angekündigten Programmzeiten abgewichen wird. Als Abhilfe wurde deshalb bereits vorgeschlagen, zusammen mit dem Fernsehsignal codiert - vorzugsweise in einer Datenzeile innerhalb des vertikalen Austastbereiches - für jeden Beitrag ein diesen kennzeichnendes Identifikationssignal, kurz Label genannt, als statischen Beitrags-Istwert zyklisch mitzuübertragen und dadurch eine ereignisgesteuerte Aufzeichnung zu ermöglichen.

Als eine solche Beitragskennzeichnung könnte, wie schon einmal vorgeschlagen wurde (Bundesministerium für Forschung und Technologie, Forschungsbericht TK 0054, Nachrichtentechnik, "Digitales Kennungssystem ZPS", Januar 1980) eine mehrstellige Nummer verwendet werden, die dann gleichermaßen als Sollinformation im Programmankündigungsmedium wie auch als Label im Fernsehsignal zu codieren wäre und die keinerlei Realzeitbezug hätte. Der Vorteil dieses Vorschlags bestünde in einer relativ einfachen automatischen Aufzeichnungsmöglichkeit auch für über den angekündigten Tag hinaus verschobene Beiträge, denn ein solches System würde - vom Zeitpunkt der Sollwerteingabe an - im passenden TV-Kanal unentwegt auf das Auftreten der zur Sollwertnummer äquivalenten Label-Nummer "lauern". Ein erster, wesentlicher Nachteil dieses Vorschlags bestünde darin, daß alle zum Lauern auf ein Label erforderlichen Gerätebaugruppen (Tuner, ZF-Verstärker, Demodulator, Labeldecoder, Vergleicher) in ununterbrochenem Dauerbetrieb zu halten wären, was aus Gründen des Stromverbrauches und vor allem der Brandverhütung nicht erwünscht sein kann. Zum zweiten würden sich, wenn angekündigte und einprogrammierte Beiträge ganz entfielen, unerfüllbar gewordene "Laueraufträge" in der Speichereinrichtung anhäufen und das System unnötig belasten.

Ein rundfunk- und industrieinterner Vorschlag für eine andere Art der Beitragskennung geht dahin, eine Kompatibilität zwischen der bekannten zeitgesteuerten Aufzeichnung per Schaltuhr und der nunmehr angestrebten ereignisgesteuerten Aufzeichnung per mitausgesendetem Label vorzusehen, insbesondere um dadurch eine schrittweise Einführung der Labelaussendung zu ermöglichen. Als Sollwertinformation wird hierbei im Strichcode der Programmzeitschriften die angekündigte Beitragsanfangszeit samt Kalenderdatum und zugehöriger Programmquelle codiert, ergänzt um die (nur für Zeitsteuerung erforderliche) Endzeit- bzw. Beitragsdauerinformation. Hiermit läßt sich in an sich bekannter Weise einerseits ein zeitgesteuerter Aufzeichnungbetrieb vorprogrammieren. Zugunsten einer alternativen Ereignissteuerung wird mit dem Fernsehprogrammsignal als statisches Istwertlabel ebenfalls die angekündigte Beitragsanfangszeit samt Kalenderdatum codiert ausgestrahlt, um hiermit den jeweiligen Beitrag direkt zu kennzeichnen und empfangsseitig identifizierbar zu machen. (Auch eine verspätet beginnende Sendung enthält im mitausgestrahlten Label die angekündigte Anfangszeit, also den notwendigerweise gleichen Code wie er aus der Programmzeitschrift für den betreffenden Beitrag als Sollwert ausgelesen wurde.)

Aufgabe der vorliegenden Erfindung ist es, eine Einrichtung der eingangs erwähnten Art zu schaffen, die unter Verwendung des intern vorgeschlagenen Anfangszeitlabels die Nachteile bekannter Verfahren, nämlich den unerwünschten Dauerbetrieb der zum Empfang des Labels notwendigen Gerätebaugruppen und die Anhäufung der Sollwertinformationen programmierter, aber nicht gesendeter Programmbeiträge im Datenspeicher vermeidet.

Die Aufgabe wird erfindungsgemäß durch die kennzeichnenden Merkmale des Anspruchs 1 gelöst.

Vorteilhafte Weiterbildungen der erfindungsgemäßen Einrichtung ergeben sich aus den Unteransprüchen.

Die Erfindung wird anhand der Figuren näher erläutert. Es zeigt:

Fig. 1     Die schematischen Funktionsabläufe bei einer erfindungsgemäßen Einrichtung für den Fall der Ausstrahlung bzw.

Nichtausstrahlung eines angekündigten Beitrags;

Fig. 2 das Blockschaltbild einer Ausführungsform der erfindungsgemäßen Einrichtung unter Verwendung eines Mikrocomputers, und

Fig. 3 ein vereinfachtes Flußdiagramm für die Grundfunktionen einer Einrichtung gemäß Fig. 2.

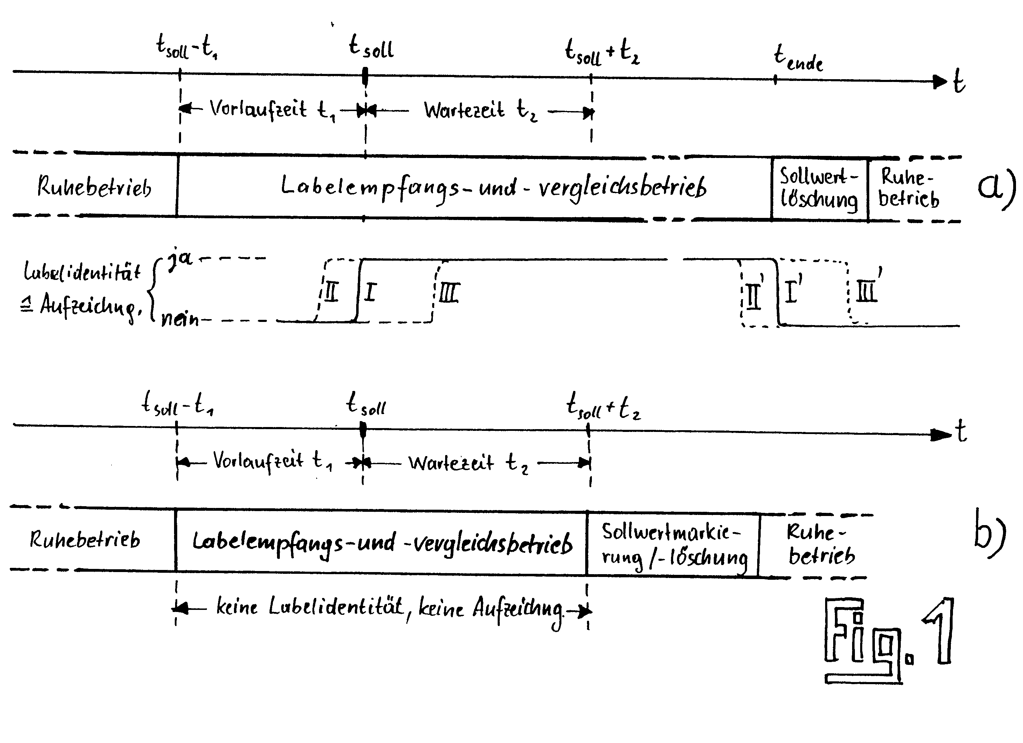

In Fig. 1a ist der Fall angenommen, daß ein für den Sollzeitpunkt $t_{soll}$ angekündigter und zur Aufzeichnung mit dem Videorecorder 7 vorprogrammierter Programmbeitrag entweder zur angekündigten Zeit ($I \doteq t_{soll}$) oder verfrüht (II) innerhalb der Vorlaufzeit $t_1$ oder verspätet (III) innerhalb der Wartezeit $t_2$ auf Sendung geht. Der rechtzeitig zum Zeitpunkt $t_{soll}$-$t_1$ nach Beendigung des Ruhebetriebs aktivierte Labelempfangs- und -vergleichsbetrieb prüft von nun an auf Identität zwischen empfangenem Label und gespeichertem Sollwert. Diese Identität liegt zunächst noch nicht vor, denn noch wird ja im betreffenden Kanal der vorangehende Beitrag und das ihm zugeordnete Label ausgestrahlt. Erst mit Beginn des aufzuzeichnenden Beitrags werden dann Sollwert und Ist-Label identisch. Sobald und solange eine solche Identität festgestellt wird, geht bzw. bleibt der Videorecorder 7 im Aufzeichnungsbetrieb, egal, ob der betreffende Programmbeitrag pünktlich (I), zu früh (II) oder zu spät (III) beginnt und/oder endet (I', II', III'). Es erfolgt also eine ereignisgesteuerte Aufzeichnung. Nach ihrer Beendigung kann der abgehandelte Sollwert aus dem Datenspeicher 3 gelöscht werden und wieder Ruhebetrieb eintreten.

Fig. 1b zeigt demgegenüber den Fall, daß ein angekündigter und vorprogrammierter Beitrag ausfällt und stattdessen ein ganz anderer Ersatzbeitrag (mit anderem Label) gesendet wird. (Trotz nominell gleicher Anfangszeit kann z. B. für den Ersatzbeitrag ein im Code um eine Minute "späteres" Label gewählt werden, um Ungleichheit mit dem erstangekündigten Beitrag herzustellen. Dasselbe gilt natürlich für den Strichcode in der Programmzeitschrift).

Der gemäß Fig. 1b wiederum rechtzeitig ($t_{soll}$ - $t_1$) aktivierte Labelempfangs- und -vergleichsbetrieb findet nun aber weder innerhalb der Vorlaufzeit $t_1$ noch innerhalb der Wartezeit $t_2$ ein zum gespeicherten Sollwert identisches Label und "resigniert" schließlich dann zum Zeitpunkt $t_{soll}$ +2. Als Benutzerhinweis erfolgt eine Markierung des betreffenden Aufzeichnungsauftrags bevor ggf. der dementsprechende Sollwert gelöscht wird. Ebenso wie beim Ablauf gemäß Fig. 1a nach beendeter Aufzeichnung begibt sich das System auch nach "resignierender" Beendigung eines vergeblichen Aufzeichnungsversuches schließlich wieder in den Ruhebetrieb, in dem nur die Funktion der Kalenderuhr 4 und eines (ggf. intermittierend arbeitenden) Vergleichers zum Feststellen des jeweils nächsten (ggf.

ungefähren) Einstiegszeitpunktes $t_{soll\ n+1}$ - $t_1$ erforderlich ist.

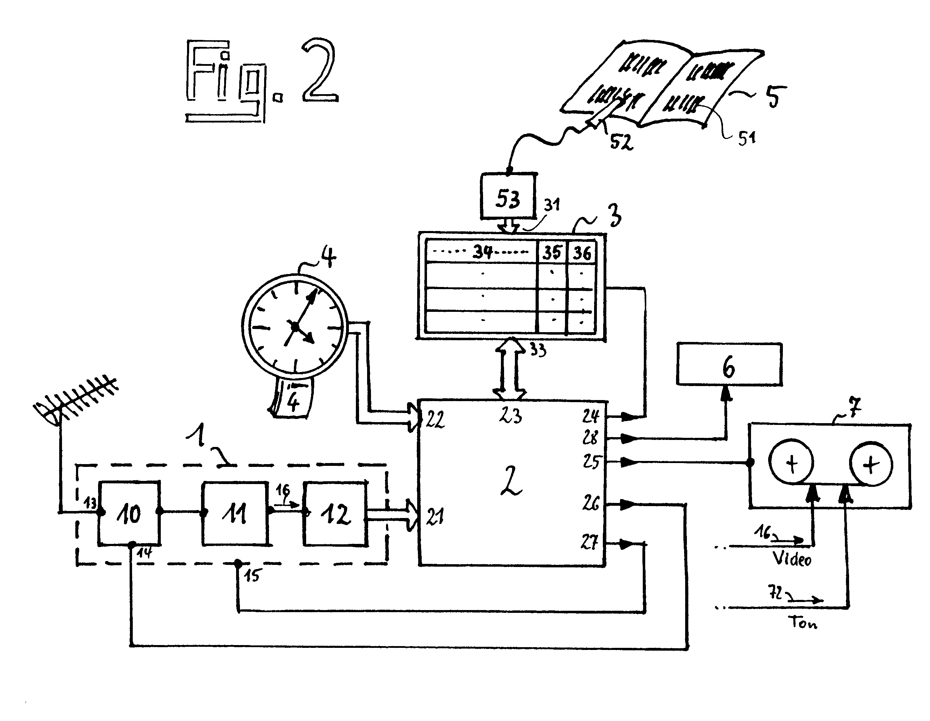

Fig. 2 zeigt das Blockschaltbild einer erfindungsgemäßen Einrichtung in einer bevorzugten Ausführungsform, bei welcher alle logischen Funktionen in einem Mikrocomputer 2 zusammengefaßt sind. In letzterem sind insbesondere auch ein nach dem Stand der Technik vorausgesetzter Vergleicher sowie Speichereinrichtungen enthalten. Zur anschaulicheren Darstellung ist jedoch in Fig. 2 ein separater, über eine Adress- und Steuerleitungsverbindung 24/32 miteinbezogener Sollwertspeicher 3 angenommen, der aber ebensogut als Bestandteil des Mikrocomputers 2 hätte verausgesetzt werden können. Die weiteren wesentlichen Baugruppen sind: eine Fernsehempfangseinrichtung 1, welche neben den aufzuzeichnenden Programmsignalen für Bild 16 und Ton 72 auch das mitgesendete Istwert-Label bereitstellt, eine Einrichtung (52, 53) zur Übernahme der Sollwerte und schließlich der zu steuernde Videorecorder 7.

Im einzelnen stellen sich die in Fig. 2 dargestellten Zusammenhänge wie folgt dar:

Als Informationsträger für den Sollwert einer Beitragsankündigung ist in Fig. 2 ein in einer Programmzeitschrift 5 jedem Beitrag zugeordneter Strichcode 51 angenommen. Dessen Inhalt wird bei einer Beitragsprogrammierung über eine Sensoreinrichtung 52 und ein vom Mikrocomputer 2 in nicht eigens dargestellter Weise "mitbetreutes" Interface 53 dem Sollwertspeicher 3 über dessen Eingang 31 zugeführt. Ein derartiger Speicher 3 ist in der Regel für die Speicherung einer Mehrzahl von Sollwerten (= Aufzeichnungswünschen) ausgelegt. Wie schon einleitend erwähnt, enthält ein solcher Sollwert für die hier ausschließlich zu betrachtende ereignisgesteuerte Betriebsart neben dem angekündigten Beitragsbeginn (Uhrzeit und Kalenderdatum), welcher dem Speicherbereich 34 zugeordnet sei, auch noch den Quellencode im Speicherbereich 35. Aus dem Quellencode kann der Mikrocomputer 2 "zu gegebener Zeit" und aufgrund einer ihm eingegebenen Tabelle auf den Kanal des Tuners 10 schließen, auf dem der betreffende Beitrag zu erwarten ist.

Den Realzeitbezug, den er braucht, um nur zu bestimmten und zwar erfolgversprechenden Zeiten "lauern" zu müssen, erhält der Mikrocomputer 2 aus einer Kalenderuhr 4 über seinen Realzeitdateneingang 22. Die jeweilige Sollwertinformation wird ihm vom Sollwertspeicherausgang 33 an seinem Sollwertdateneingang 23 und schließlich die beitragsbezogene Istwert-Labelinformation über seinen Istwert-Dateneingang 21 vom Labeldecoder 12 zugeführt.

Die Fernsehempfangseinrichtung 1 ist über einen Steuereingang 15 durch den Mikrocomputerausgang 27 aktivierbar bzw deaktivierbar, die Kanalwahl des Tuners 10 wird vom Mikrocomputerausgang 26 über den Tunersteuereingang 14 bewerkstelligt.

Über die Steuerleitung zwischen Mikrocomputerausgang 25 und Recordereingang 71 wird schließlich der Aufzeichnungsbetrieb des Recorders 7 ein- und ausgeschaltet.

## Funktionsablauf:

Der unter den im Speicher 3 chronologisch abgelegten Sollwerten als nächster "fällige" Sollwert enthält im Speicherbereich 34 den zugehörigen prognostizierten Beitragsbeginn; dieser Zeitpunkt sei aber im Augenblick noch nicht erreicht. Die gesamte Einrichtung befindet sich im Ruhebetrieb gemäß Fig. 1, d.h. außer der stets in Betrieb befindlichen Kalenderuhr 4 und einem permanent oder auch nur intermittierend ausgeführten Zeitvergleich im Mikrocomputer 2 (oder auch alternativ in einem auf die Kalenderuhr 4 ausgelagerten, nicht dargestellten Zeitvergleicher) sind alle Funktionsgruppen deaktiviert. Der besagte Zeitvergleich zwischen $t_{soll}$ aus dem Speicher 3 minus Vorlaufzeit $t_1$ und der Realzeit stellt zu gegebener Zeit Gleichheit zwischen beiden Zeitwerten fest. Daraufhin wird ggf. der Mikrocomputer 2 auf Dauerbetrieb und die Fernsehempfangseinrichtung 1 über die Leitung 27/15 wirksam geschaltet. Über die Leitung 26/14 und aufgrund der ihm eingegebenen Tabelle stellt der Mikrocomputer 2 entsprechend dem Quellencode im Speicherbereich 35 jene Kanalposition im Tuner 10 ein, auf welcher der betreffende Beitrag erwartet wird. Der Tuner 10 empfängt nun über seinen Antenneneingang 13 das entsprechende modulierte Fernsehsignal. Der nachgeschaltete ZF-Verstärker und Demodulator 11 liefert an seinem Ausgang im Basisband das Programmvideosignal 16 mit der dort in einer Datenzeile enthaltenen Istwert-Labelinformation. Im Labeldecoder 12 wird diese Information ausselektiert und dem Mikrocomputereingang 21 zur Verfügung gestellt. Wie bereits im Zusammenhang mit Fig. 1a erläutert, wird nun ein Identitätsvergleich zwischen aktuellem Sollwert und empfangenem Label initiiert und sobald und solange Identität vorliegt über die Leitung 25/71 der Aufzeichnungsbetrieb des Recorders bewirkt.

Ergibt sich sendeseitig, z. B. wegen eines Filmrisses, eine Unterbrechung des Programmbeitrages, so wird für deren Dauer ein verabredetes Pseudo-Label (z. B. Tag 0, Monat 15, Stunde 29, Minute 63) anstelle des aktuellen Istwert-Labels ausgesendet. Der Mikrocomputer 2 unterbricht dann für die Dauer dieses Pseudolabels den Aufzeichnungsvorgang und führt ihn wieder fort, sobald das dem aktuellen Sollwert entsprechende Istwert-Label wieder empfangen wird. Mit dem endgültigen Verschwinden dieses Labels (daran erkennbar, daß ihm kein Pseudo-Label, sondern ein "normales" Label folgt) wird dann die Aufzeichnung beendet, der aktuelle Sollwert aus dem Speicher 3 gelöscht und Ruhebetrieb aufgenommen.

Der im Zusammenhang mit Fig. 1b bereits geschilderte Fall der Nichtsendung eines erwarteten Beitrags braucht anhand Fig. 2 nicht nochmals beschrieben zu werden, da die Analogien zur obigen Ablaufbeschreibung ohne weiteres ersichtlich sind. Lediglich nach dem resignierendem Abschluß eines solchen Aufzeichnungsversuchs ergeben sich einige zusätzliche Funktionen. Die Tatsache, daß ein gewünschter Beitrag nicht gesendet wurde, wird vom Mikrocomputer entweder im Speicherbereich 36 oder aber in einem anderen, internen Speicher festgehalten und als Hinweis dem Benutzer entweder über die Ausgangsleitung 28 auf einem Anzeigefeld 6 oder per Bildschirm angezeigt.

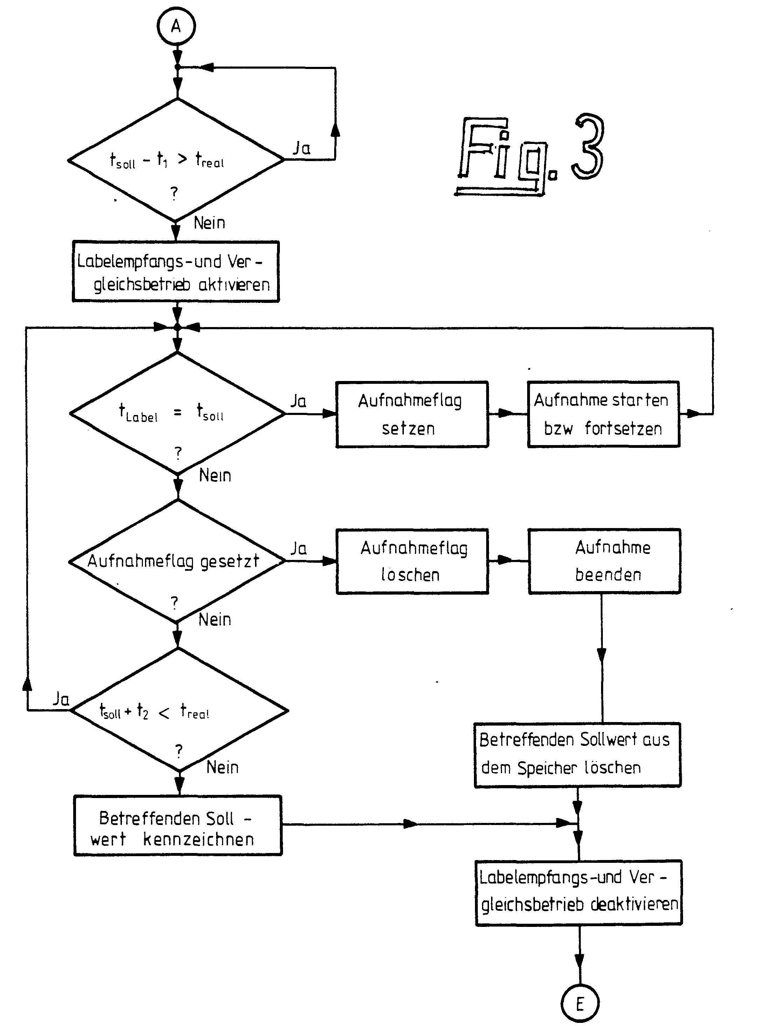

Als zusätzliche Veranschaulichung der obigen Funktionsbeschreibungen dient das Flußdiagramm der Fig. 3. Es beginnt bei A, beinhaltet die Abarbeitung eines einzelnen, vorgegebenen Sollwertes, endet bei E mit erfolgter bzw. wegen Beitragsaustausch unterlassener Aufzeichnung und bedarf zunächst keiner weiteren Erläuterung.

Bei den bisherigen Beschreibungen des Sollwert/Labelvergleichs wurde immer davon ausgegangen, daß ein erwartetes Vergleichsresultat sofort die daran geknüpfte Funktion wirksam bzw. unwirksam macht. Bei der relativ hohen Übertragungsrate in einer Datenzeile (25 Übertragungszyklen pro Sekunde) kann jedoch auf sehr einfache Weise und auf Kosten einer leicht tolerierbaren Erhöhung der Reaktionszeit des Systems ein Fehlerschutz gegen Fehlübertragung einzelner Labels eingeführt werden. Das kann dadurch geschehen, daß nicht bereits auf ein einzelnes erwartetes Label reagiert wird, sondern erst dann, wenn dieses $n$ mal nacheinander identisch empfangen worden ist. Entsprechend wird verfahren bei Funktionen, die vom Verschwinden eines Label abhängen: erst wenn ein vom aktuellen Label unterschiedliches Label $m$ mal nacheinander identisch empfangen wurde, ist ein zufälliger Übertragungsfehler ausgeschlossen und die davon abgeleitete Funktion wird ausgeführt. Im Flußdiagramm der Fig. 3 ist zu diesem Zweck beispielsweise die Fragestellung in der zweiten Verzweigungsraute von oben folgendermaßen zu ergänzen: "War $n$ mal lückenlos nacheinander $t_{Label} = t_{soll}$?"

## Patentansprüche

1. Einrichtung zum automatischen Ein- und Ausschalten des Aufzeichnungsbetriebs eines mit einer Realzeit-Kalenderuhr, einem Datenspeicher und einem Datenvergleicher ausgerüsteten Videorecorders, bei welchem das Zeitdatum des vorgesehenen Beginns eines Fernsehprogrammbeitrages einerseits als ein Sollwert in eine Speichereinrichtung eingebbar ist und andererseits als ein für die Dauer eines Beitrages innerhalb des betreffenden Fernsehsignals als Label zyklisch mitübertragener statischer Istwert empfangbar und mit dem gespeicherten Soll-Zeitdatum vergleichbar ist, wobei

- der Empfang des Istwert-Labels und sein Vergleich mit dem gespeicherten Sollwert um eine vorgebbare oder vorgegebene Vorlaufzeit ($t_1$) vor dem dem gespeicherten Soll-Zeitdatum entsprechenden Realzeitpunkt wirksam geschaltet wird, und
- sofern das erwartete Istwert-Label innerhalb der Vorlaufzeit ($t_1$) eintrifft, in Abhängigkeit vom Eintreffen des erwarteten Istwert-Labels der Aufzeichnungsbetrieb des Videorecoders eingeschaltet wird und in Abhängigkeit von der Mitaussendung des erwarteten Istwert-Labels aufrechterhalten wird,
dadurch gekennzeichnet, daß, sofern das erwartete Istwert-Label weder innerhalb der Vorlaufzeit (t1) noch innerhalb einer sich an die Vorlaufzeit anschließenden, vorgegebenen oder vorgebbaren Wartezeit ($t_2$) eintrifft, in Abhängigkeit vom Ende der Wartezeit ($t_2$) sowohl der Labelempfangs- und -vergleichsbetrieb unwirksam geschaltet als auch die zugehörige Sollwertinformation im Datenspeicher (3) gelöscht und/oder als überholt markiert wird.

2. Einrichtung nach Anspruch 1, für die Auswertung eines Fernsehsignals, bei welchem im Falle einer Programmunterbrechung anstelle des Istwert-Labels ein verabredetes Pseudo-Label übertragen wird, dadurch gekennzeichnet, daß der Aufzeichnungsbetrieb des Videorecorders (7) in Abhängigkeit von der Dauer des Empfangs des Pseudo-Labels unterbrochen wird.

3. Einrichtung nach Anspruch 1 oder 2, dadurch gekennzeichnet, daß die vom Auftreten eines erwarteten Istwert-Labels oder eines Pseudo-Labels abgeleiteten Funktionen erst dann wirksam bzw. unwirksam geschaltet werden, wenn das betreffende Label in einer vorgebbaren oder vorgegebenen Anzahl n aufeinanderfolgender Übertragungszyklen identisch empfangen worden ist.

4. Einrichtung nach einem der Ansprüche 1 bis 3, dadurch gekennzeichnet, daß die vom Verschwinden eines funktionsbestimmenden Labels oder Pseudo-Labels abgeleiteten Funktionen erst dann wirksam bzw. unwirksam geschaltet werden, wenn ein dem funktionsbestimmenden Label ungleiches Label in einer vorgebbaren oder vorgegebenen Anzahl m aufeinanderfolgender Übertragungszyklen identisch empfangen worden ist.

5. Einrichtung nach Anspruch 1 für die Auswertung eines Fernsehsignals, bei welchem das erwartete Istwert-Label weder innerhalb der Vorlaufzeit ($t_1$) noch innerhalb der Wartezeit ($t_2$) eintrifft und wobei in Abhängigkeit vom Ende der Wartezeit ($t_2$) die Sollwertinformation im Datenspeicher (3) als überholt markiert wird, dadurch gekennzeichnet, daß der das erwartete Label betreffende Speicherplatz (36) als Benutzerhinweis eine Kennzeichnung erhält, die auf seinen nicht mehr als Sollwert aktuellen Inhalt aufmerksam macht.

6. Einrichtung nach Anspruch 1 für die Auswertung eines Fernsehsignals, bei welchem das erwartete Istwert-Label weder innerhalb der Vorlaufzeit ($t_1$) noch innerhalb der Wartezeit ($t_2$) eintrifft und wobei in Abhängigkeit vom Ende der Wartezeit ($t_2$), die Sollwertinformation im Datenspeicher (3) gelöscht wird, dadurch gekennzeichnet, daß vor der Löschung der das erwartete Label betreffenden Sollwertinformation dieselbe ganz oder teilweise als Benutzerhinweis in einen anderen Speicher überführt wird.

## Claims

1. Device for the automatic switching on and off of the recording mode of a video recorder equipped with a real time calendar clock, a data memory and a data comparator, in which the time datum of the intended start of a television programme is inputted as a desired value into a storage means and receivable as a static actual value cyclicly jointly transmitted as a label for the duration of a programme within the particular television signal and can be compared with the stored desired time datum, in which

the reception of the actual value label and its comparison with the stored desired value is effectively switched at a real time by a presettable or preset prerun time ($t_1$) before the stored desired time datum, and

if the expected actual value label occurs within the prerun time ($t_1$), as a function of the occurence of the expected actual value label the recording mode of the video recorder is switched on and is maintained as a function of the joint transmission of the expected actual value label,

characterized in that if the expected actual label does not occur within the prerun time ($t_1$) or within a preset or presettable waiting time ($t_2$) following on to the prerun time, as a function of the end of the waiting time ($t_2$), the label reception and comparison mode is switched off and the associated desired value information is erased in the data memory (3) and/or marked as obsolete.

2. Device according to claim 1 for the evaluation of a television signal, in which in the case of a programme interruption an agreed pseudo-label is transmitted in place of the actual value label, characterized in that the recording mode of the video recorder (7) is interrupted as a function of the duration of the reception of the pseudo-label.

3. Device according to claims 1 or 2,

characterized in that the functions derived from the occurence of an expected actual value label or a pseudo-label are only switched on or off, if the particular label is identically received in a presettable or preset number n of successive transmission cycles.

4. Device according to one of the claims 1 to 3, characterized in that the functions derived from the disappearance of a function-determining label or pseudo-label are only switched on or off if a label not identical to the function-determining label is identically received in a presettable or preset number m of successive transmission cycles.

5. Device according to claims 1 for the evaluation of a television signal, in which the expected actual value label does not occur within the prerun time ($t_1$) or within the waiting time ($t_2$) and in which the desired value information is marked as obsolete in the data memory (3) as a function of the end of the waiting time ($t_2$), characterized in that the storage location (36) relating to the expected label contains as user information a marking revealing its content no longer being a desired value.

6. Device according to claim 1 for the evaluation of a television signal, in which the expected actual value label does not occur within the prerun time ($t_1$) or within the waiting time ($t_2$) and in which the desired value information is marked as obsolete in the data memory (3) as a function of the end of the waiting time ($t_2$), characterized in that prior to erasing the desired value information relating to the expected label, it is wholly or partly transferred as user information into another memory.

## Revendications

1. Installation pour mettre en oeuvre et arrêter automatiquement le mode d'enregistrement d'un magnétoscope, comportant une horloge en temps réel, une mémoire de données et un comparateur de données, magnétoscope dans lequel, d'une part, l'instant du début prévu d'une émission de télévision est introduit comme valeur de consigne dans une mémoire et, d'autre part, il reçoit un label pour la durée d'une émission, label contenu dans le signal vidéo correspondant, et transmis de manière cyclique comme valeur réelle statique qui est comparée à l'instant de consigne inscrit en mémoire, installation dans laquelle,

- la réception de la valeur réelle du label et sa comparaison à la valeur de consigne inscrite en mémoire est mise en oeuvre pendant une période d'avance ($t_1$) prédéterminée ou prédéterminable avant l'instant réel correspondant à la date de consigne inscrite en mémoire et,
- dans la mesure où la valeur réelle du label, prévue arrive à l'intérieur de la période

d'avance ($t_1$), en fonction de l'arrivée de la valeur réelle prévue du label, elle met en oeuvre le mode d'enregistrement du magnétoscope et on maintient ce mode d'enregistrement en fonction de l'émission combinée de la valeur réelle prévue du label, installation caractérisée en ce que dans la mesure où la valeur réelle prévue du label arrive soit à l'intérieur de la période d'avance ($t_1$) ou à l'intérieur d'une période d'attente ($t_2$) qui fait suite à la période d'avance et qui est prédéterminée ou prédéterminable, en fonction de la fin de la période d'attente ($t_2$), elle met hors service le mode de réception et de comparaison de label et elle efface l'information de valeur de consigne correspondante dans la mémoire de données (3) et/ou on l'indique comme étant dépassée.

2. Installation selon la revendication 1 pour l'exploitation d'un signal vidéo dans lequel en cas d'interruption d'un programme, elle transmet un pseudo-label convenu à la place de la valeur réelle du label, installation caractérisée en ce qu'elle interrompt le mode d'enregistrement du magnétoscope (7) en fonction de la durée de réception du pseudo-label.

3. Installation selon la revendication 1 ou 2, caractérisée en ce que les fonctions correspondant à l'arrivée d'une valeur réelle, prévue, de label ou d'un pseudo-label ne sont mises en oeuvre ou ne sont arrêtées que si le signal correspondant a été reçu de manière identique un nombre n prédéterminé ou prédéterminable de fois, pendant les cycles de transmission successifs et de manière identique.

4. Installation selon l'une des revendication 1 à 3, caractérisée en ce que les fonctions dérivées de la disparition d'un label déterminant la fonction ou d'un pseudo-label ne sont mises en oeuvre ou au repos qu'après la réception identique et pendant m cycles de transmission successifs, d'un label différent du label déterminant la fonction, m étant un nombre prédéterminé ou prédéterminable.

5. Installation selon la revendication 1 appliquée à un signal vidéo dans lequel la valeur réelle prévisible du label arrive soit pendant la période d'avance ($t_1$), soit pendant la période d'attente ($t_2$) et qui, en fonction de la fin de la période d'attente ($t_2$) repère comme étant dépassée, l'information de la valeur de consigne dans la mémoire de données (3), installation caractérisée en ce que l'emplacement de mémoire (36) correspondant au label attendu contient une caractéristique comme indication d'utilisation, caractéristique qui attire l'attention sur le contenu qui n'est plus actuel comme valeur de consigne.

6. Installation selon la revendication 1 pour l'exploitation d'un signal vidéo dont la valeur réelle prévue du label, n'arrive ni pendant la période d'avance ($t_1$), ni pendant la période d'attente ($t_2$) et en fonction de la fin la période d'attente ($t_2$) doit effacer l'information de valeur de consigne dans la mémoire de données (3).

installation caractérisée en ce qu'avant l'effacement de l'information de la valeur de consigne concernant le label prévu, celle-ci est transmise totalement ou partiellement comme indication destinée à l'utilisateur, dans une autre mémoire.

Fig. 1

EP 0 133 985 B1

Fig. 2

EP 0 133 985 B1

Fig. 3